# EUROPEAN PATENT APPLICATION

(11) **EP 1 729 170 A2**
(43) Date of publication of application: **06.12.2006**
(21) Application number: 06113876.4
(22) Date of filing: 12.05.2006
(51) Int. Cl.: G03B 3/10, G02B 7/04

(54) **Camera module and lens moving control device thereof**

(30) Priority: 03.06.2005 CN 200510200785
(71) Applicant: ASUSTeK Computer Inc., Peitou, Taipei City (TW)
(72) Inventor: Chen, Yung-Chuan, Taipei (TW); Lee, Yi-Ming, Taipei (TW); Chen, Yen-Kuang, Taipei (TW)
(74) Representative: Barth, Stephan Manuel

(57) **Abstract**

A camera module includes a lens (21), an actuator (25), a first magnetic device (22) and a second magnetic device (23). The actuator is for applying a driving force to move the lens. The first magnetic device is disposed on the lens. The second magnetic device is for interacting with the first magnetic device to generate a controlling force. The controlling force is reverse to the driving force in direction. When the actuator applies the driving force to move the lens, the controlling force provided by the second magnetic device serves as a controlling force for the lens moving.

## Description

This application claims the benefit of People's Republic of China application Serial No. 200510078505.0, filed June 3, 2005, the subject matter of which is incorporated herein by reference.

### BACKGROUND OF THE INVENTION

### Field of the Invention

The invention relates in general to a camera module, and more particularly to a camera module using a controlling force to restore lens moving, and lens moving control device thereof.

### Description of the Related Art

In a camera module of a prior digital camera, the lens is driven to move by an actuator. In addition, the lens requires a controlling force to move back and forth so as to focus images on a sensor.

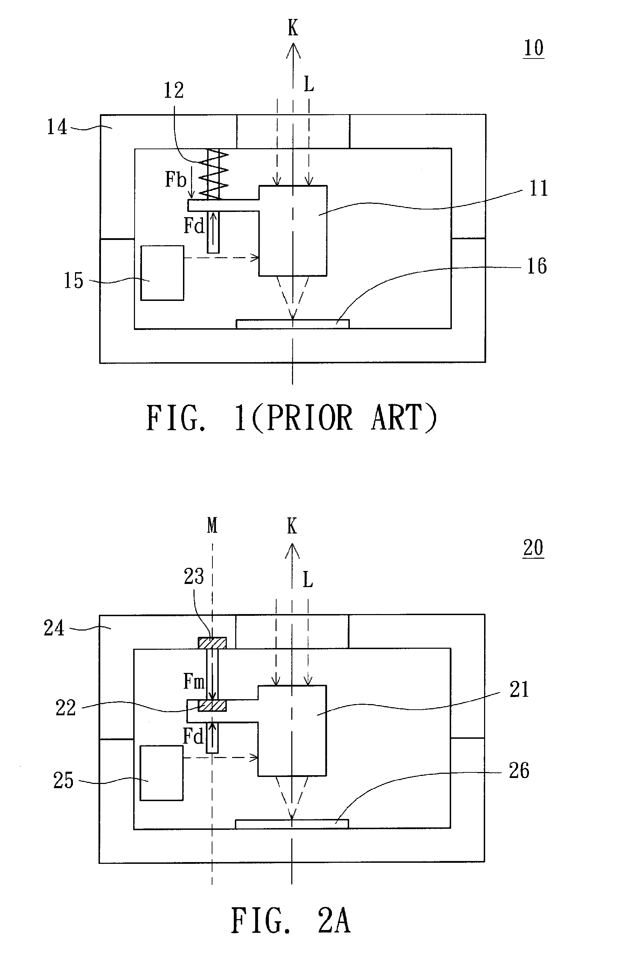

FIG. 1 shows a cross-sectional view of a conventional camera module using a spring to generate the controlling force. In the camera module 10, the actuator 15 generates a driving force Fd to move the lens 11 along an optical-axis direction K, meanwhile the spring 12 generates a controlling force Fb to restore motion of the lens 11. Therefore, the lens can be moved back and forth to achieve the purpose of focusing images on the sensor 16. The spring 12 is disposed between the lens 11 and the upper housing 14 in a contact way. Moreover, the controlling force Fb provided by the spring 12 can prevent gear wheels (not shown in the figure) in the actuator 15 from generating backlash as rotating.

The conventional camera module uses elastic devices such as springs, metal pieces, and elastic plates to generate the controlling force for the lens moving. However, the conventional method for generating a controlling force has the following disadvantages:

1. Owing that the elastic devices have to contact with lens components, a loud noise and resonant vibration is generated in the lens moving.

2. Using complicated elastic devices increases fabrication complication of the camera module.

3. Disposition of the elastic devices increases volume of the camera module.

### SUMMARY OF THE INVENTION

It is therefore an object of the invention to provide a camera module and lens moving control device thereof. The above-mentioned disadvantages of the conventional camera module can be prevented as magnetic devices are used to provide a controlling force in a non-contact way instead of the contact-type elastic devices.

The invention achieves the above-identified object by providing a camera module including a lens, an actuator, a first magnetic device and a second magnetic device. The actuator is for applying a driving force to move the lens. The first magnetic device is disposed on the lens. The second magnetic device is for incorporating with the first magnetic device to generate a controlling force which is reverse to the driving force in direction. When the actuator applies the driving force to move the lens, the controlling force provided by the second magnetic device serves as a restoring force for the lens moving.

The invention achieves the above-identified object by providing a lens moving control device, applied in a camera module including an actuator for applying a driving force to move the lens. The device includes a first magnetic device and a second magnetic device. The first magnetic device is connected to the lens. The second magnetic device, located in the camera module, is for incorporating with the first magnetic device to generate a controlling force which is reverse to the diving force in direction. When the actuator applies the driving force to move the lens, the lens moving control device uses the controlling force as a restoring force for the lens moving.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a cross-sectional view of a conventional camera module using a spring to generate the controlling force.

FIG. 2A is a cross-sectional view of a camera module according to a preferred embodiment of the invention.

FIG. 2B is a cross-sectional view of the camera module whose actuator drives the lens to depart from the sensor as shown in FIG. 2A.

FIG. 2C is a cross-sectional view of the camera module whose lens is driven near the sensor as shown in FIG. 2A.

### DETAILED DESCRIPTION OF THE INVENTION

The invention uses a lens moving control device to provide a controlling force for lens moving in a camera module instead of the conventional contact-type spring mechanism. Besides, based on the same operation principles, the invention can be applied to optical lens modules in any type of digital camera, and mobile phone with digital camera function.

Referring to FIG. 2A, a cross-sectional view of a camera module according to a preferred embodiment of the invention is shown. The camera module 20, such as used in a mobile phone or a digital camera, includes a lens 21, a first magnetic device 22, a second magnetic device 23, an upper housing 24, an actuator 25 and a sensor 26. In the camera module 20, the actuator 25 generates a driving force Fd to move the lens 21 along an optical-axis direction K so that the light L incident into the lens 21 can be focused on the sensor 26. The first magnetic device 22 is embedded in the lens 21 while the second magnetic device 23 is embedded in the upper housing 24. The first magnetic device 22 and the second magnetic device 23 are disposed on the same line M parallel to the optical-axis direction K.

As shown in FIG. 2A, the first magnetic device 22 and the second magnetic device 23 are magnets with the same polarity for providing a controlling force Fm in a direction reverse to the optical-axis direction K for the lens moving. Therefore, the lens 21 can move back and forth to achieve a light focusing effect. In the meanwhile, owing that the positioning of the lens in a focusing process needs high accuracy, the controlling force Fm is also used to prevent the gear wheels for driving the lens 21 from generating backlash to achieve the purpose of exactly positioning.

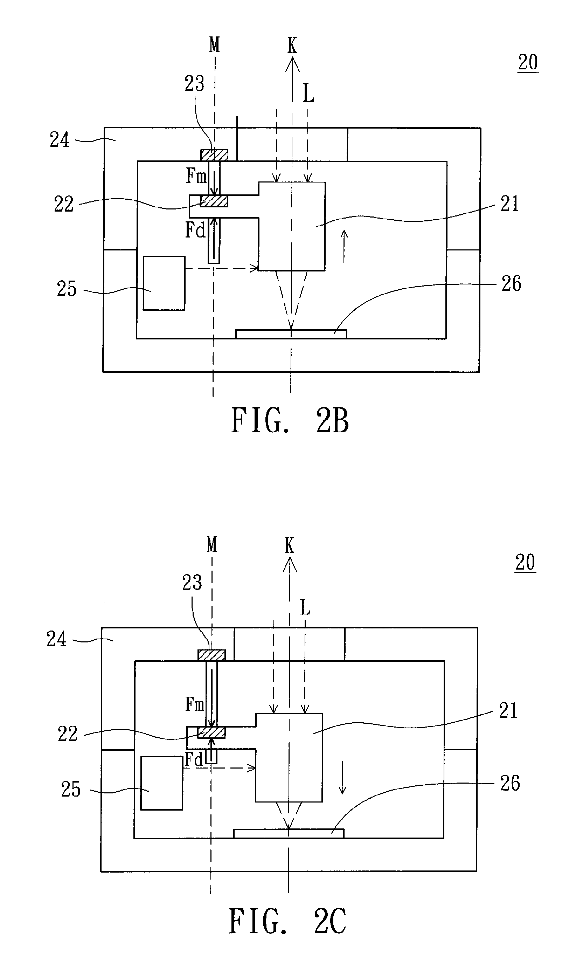

Referring to FIG. 2B, a cross-sectional view of the camera module 200 whose actuator 25 drives the lens 21 to depart from the sensor 26 in FIG. 2A is shown. When the driving force Fd applied to the lens 21 by the actuator 25 is larger than the controlling force Fm provided by the first magnetic device 22 and the second magnetic device 23 as repelling to each other, the actuator 25 drives the lens 21 along the optical-axis direction K to depart from the sensor 26. In the meanwhile, the controlling force Fm serves as a buffer for the lens' moving upward, thereby eliminating backlash of the gear wheels (not shown in the figure) in the actuator 25.

Referring to FIG. 2C, a cross-sectional view of the camera module 200 whose lens 21 is driven near the sensor 26 in FIG. 2A is shown. When the driving force Fd of the lens 21 provided by the actuator 25 is reduced so that the controlling force Fm provided by the first magnetic device 22 and the second magnetic device 23 is larger than the driving force Fd, the lens 21 turns to move near the sensor 26. In the meanwhile, the controlling force Fm serves as a restoring force for the lens moving and the driving force Fd serves as a buffer for the lens' moving downward, thereby eliminating backlash of the gear wheels (not shown in the figure) in the actuator 25. Please note that the controlling force provided by the preferred embodiment can serve as a buffer or a restoring force to control the position of the lens. Therefore, the camera module 200 can achieve the purpose of moving the lens 21 back and forth by adjusting the driving force Fd provided by the actuator 25 and the controlling force Fm provided by the two magnetic devices 22 and 23.

As described above, although the first magnetic device 22 and the second magnetic device 23 configured to have the same polarity and provide an exclusive controlling force to the lens 22 as a restoring force are taken as an example in the camera module 200 of the invention, the camera module 200 of the invention can also use the first magnetic device 22 and the second magnetic device 23 having the opposite polarity, while the actuator drives the lens 21 in a direction reverse to the optical-axis direction K. As long as the controlling force can be properly provided to have a direction opposite to that of the driving force generated by the actuator 25, the purpose can be achieved that the lens 21 is moved back and forth and the backlash of gear wheels in the actuator is eliminated, and thus it is not apart from the scope of the invention.

Furthermore, although the first magnetic device 22 embedded in the lens 21 and the second magnetic device 23 embedded in the upper housing 24 are taken as an example in the camera module 20 of the invention, the first magnetic device 22 and the second magnetic device 23 can also be respectively disposed on the lens 21 and the upper housing 24 in any other way. The second magnetic device 23 can be even disposed at other locations in the camera module 20. As long as the second magnetic device 23 can incorporate with the first magnetic device 22 to generate the required controlling force to achieve the purpose of moving the lens back and forth and eliminating backlash of the gear wheels in the actuator. Therefore, it is still not apart from the scope of the invention.

In addition, although magnets are taken as an example for the first magnetic device 22 and the second magnetic device 23, the first magnetic device 22 and the second magnetic device 23 can also be made of a ferromagnetic material as long as the controlling force generated can maintain a specific magnitude for a long time. One of the magnetic devices 22 and 23 can also be made of a ferromagnetic material and the other is made of a paramagnetic material. As long as the controlling force required for the lens moving can be generated in a non-contact way, it will not depart from the scope of the invention.

The camera module and lens moving control device thereof disclosed by the above-mentioned embodiment of the invention has the following advantages:

1. Using magnetic devices to provide the controlling force for the lens moving in a non-contact way can prevent the noise produced by the conventional contact-type spring mechanism.

2. Using simple-structure magnets instead of the conventional spring mechanism can effectively reduce the fabrication complication of the camera module.

3. Using two magnetic devices, respectively embedded in the lens and the upper housing, to supply a controlling force to the lens instead of large-scale spring mechanism can effectively save space and thus reduce the volume of camera module.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A camera module, comprising:
a lens;
an actuator, for applying a driving force to move the lens;
a first magnetic device, disposed on the lens; and
a second magnetic device, for incorporating with the first magnetic device to generate a controlling force, wherein the controlling force is reverse to the driving force in direction;
wherein when the actuator applies the driving force to move the lens, the controlling force provided by the second magnetic device serves as a restoring force for the lens moving.

2. The camera module according to claim 1, wherein the first magnetic device and the second magnetic device have the same polarity.

3. The camera module according to claim 1, wherein the first magnetic device and the second magnetic device have the opposite polarity.

4. The camera module according to claim 1, wherein the first magnetic device is embedded in the lens.

5. The camera module according to claim 1, further comprising an upper housing, wherein the second magnetic device is embedded in an inner surface of the upper housing.

6. A lens moving control device, applied in a camera module comprising an actuator for applying a driving force to move the lens, the device comprising:
a first magnetic device, connected to the lens; and
a second magnetic device, located in the camera module, for incorporating with the first magnetic device to generate a controlling force, wherein the controlling force is reverse to the diving force in direction;
wherein when the actuator applies the driving force to move the lens, the lens moving control device uses the controlling force as a restoring force for the lens moving.

7. The lens moving control device according to claim 6, wherein the first magnetic device is disposed in the lens.

8. The lens moving control device according to claim 6, wherein the camera module comprises an upper housing and the second magnetic device is located at an inner surface of the upper housing.

9. The lens moving control device according to claim 6, wherein the first magnetic device and the second magnetic device have the same polarity.

10. The lens moving control device according to claim 6, wherein the first magnetic device and the second magnetic device have the opposite polarity.
